# EUROPÄISCHE PATENTANMELDUNG

(11) **EP 2 436 963 A2**
(43) Veröffentlichungstag der Anmeldung: **04.04.2012**
(21) Anmeldenummer: 11171658.5
(22) Anmeldetag: 28.06.2011
(51) Int. Cl.: F16K 41/00

(54) **Stellgerät zur Steuerung eines Fluidstroms**

(30) Priorität: 30.09.2010 DE 102010037897
(71) Anmelder: Samson AG, 60314 Frankfurt (DE)
(72) Erfinder: Hörschken, Klaus, 65606 Villmar (DE); Lässler, Rudolf, 63477 Maintal (DE); Karte, Thomas, 63486 Bruchköbel (DE); Kiesbauer, Jörg, 64859 Eppertshausen (DE)
(74) Vertreter: Borchert, Uwe Rudolf

(57) **Zusammenfassung**

Die Erfindung betrifft ein Stellgerät (10) zur Steuerung eines Fluidstroms, umfassend ein Grundgehäuse (12a) mit einem Zulauf (14) und einem Ablauf (16), einen im Grundgehäuse (12) zwischen Zu- und Ablauf (14, 16) angeordneten Ventilsitz(18), einen mit dem Ventilsitz (18) in Wirkverbindung bringbarer Ventilkörper (20), eine Ventilstange (22) zur Betätigung des Ventilkörpers (20), sowie eine Vorrichtung zur Betätigung der Ventilstange (22). Die Erfindung zeichnet sich dadurch aus, dass am Grundgehäuse (12a) fluiddicht ein Zusatzgehäuse (12b) angeordnet ist und Grund- und Zusatzgehäuse (12a, 12b) mit Ausnahme des Zu- und Ablaufes (14, 16) ein allseitig geschlossenes, vollständig gekapseltes, nur eine umlaufende Dichtung (24) aufweisendes Gehäuse (12) bilden, und dass die Ventilstange (22) durchführungsfrei vollständig im Innern geschlossenen Gehäuses (12) angeordnet ist.

## Beschreibung

Die Erfindung betrifft ein Stellgerät zur Steuerung eines Fluidstroms gemäß der im Oberbegriff des Patentanspruchs 1 angegebenen Art.

In der Prozessindustrie regeln Stellgeräte Fluidströme, die in der Regel nicht in die umgebene Atmosphäre gelangen sollen. Konstruktiv sind hierbei insbesondere die sogenannten "dynamischen Dichtungen" zu beachten. Eine dynamische Dichtung wird verwendet, um Durchführungen zum Beispiel im Ventilgehäuse abzudichten, durch die mit Hilfe einer Welle eine translatorische oder rotatorische Bewegung in das Ventilgehäuse eingeleitet wird. Mit Hilfe dieser Welle wird der Ventilkörper bewegt, durch unterschiedliche Stellungen des Ventilkörpers wird die jeweils gewünschte Drosselwirkung erzielt. Dynamische Dichtungen sind Verschleiß- und anderen Mechanismen unterworfen, so dass es zur Leckage von Prozessmedium in die umgebende Atmosphäre kommen kann.

Derartige Stellgeräte sind aus dem Stand der Technik hinreichend bekannt. Lediglich beispielhaft wird auf die DE 10 2006 061 017 A1 verwiesen.

Der Erfindung liegt die Aufgabe zu Grunde, ein Steuergerät zur Steuerung eines Fluidstroms gemäß der im Oberbegriff des Patentanspruches 1 angegebenen Art unter Vermeidung der genannten Nachteile derart weiterzubilden, dass die Gefahr einer Leckage und damit ein Austritt von Prozessmedium in die umgebende Atmosphäre verringert ist.

Diese Aufgabe wird durch die kennzeichnenden Merkmale des Patentanspruches 1 in Verbindung mit seinen Oberbegriffsmerkmalen gelöst.

Die Unteransprüche bilden vorteilhafte Weiterbildungen der Erfindung.

In bekannter Art und Weise umfasst das Stellgerät zur Steuerung eines Fluidstroms ein Grundgehäuse mit einem Zu- und einem Ablauf. Zwischen dem Zu- und Ablauf im Grundgehäuse ist ein Ventilsitz angeordnet. Weiterhin umfasst das Stellgerät einen mit dem Ventilsitz in Wirkverbindung bringbaren Ventilkörper sowie eine Ventilstange zur Betätigung des Ventilkörpers und eine Vorrichtung zur Betätigung der Ventilstange.

Erfindungsgemäß ist am Grundgehäuse derart ein Zusatzgehäuse fluiddicht angeordnet, dass das Grund- und Zusatzgehäuse mit Ausnahme des Zu- und Ablaufs ein allseitig geschlossenes, vollständig gekapseltes, nur eine umlaufende Dichtung aufweisendes Gehäuse bildet, wobei die Ventilstange durchführungsfrei, d.h. vollständig im Inneren des geschlossenen Gehäuses angeordnet ist.

Durch die erfindungsgemäße Ausbildung des Grund- und Zusatzgehäuses als ein geschlossenes Gehäuse sowie die erfindungsgemäße durchführungsfreie Anordnung der Ventilstange im Innern des geschlossenen Gehäuses ist in vorteilhafter Weise ein Stellgerät zur Verfügung gestellt, dass entsprechende dynamische Dichtungen zur Abdichtung einer in das Ventilgehäuse hineinreichenden Ventilstange nicht mehr aufweist, so dass die Gefahr einer Leckage aufgrund einer beschädigten dynamischen Dichtung nunmehr nicht mehr möglich ist.

Vorzugsweise ist die Vorrichtung zur Betätigung der Ventilstange außerhalb des geschlossenen Gehäuses angeordnet und steht berührungslos mit der Ventilstange in Wirkverbindung. Dies hat den Effekt, dass das Gehäuse keine weitere Öffnung für den Antrieb der Ventilstange aufweist, so dass die Gefahr einer Leckage zusätzlich reduziert ist.

Vorzugsweise ist hierbei die Vorrichtung zur Betätigung der Ventilstange derart ausgebildet, dass diese die Ventilstange über eine magnetische und/oder elektromagnetische Kraft betätigt.

Gemäß einer ersten Ausführungsform weist hierfür die Ventilstange einen Eisenkern oder einen Magnet auf, während außerhalb des geschlossenen Gehäuses ein Bezug zum Gehäuse verschiebbarer Außenmagnet angeordnet ist. Durch eine entsprechende Relativbewegung des Außenmagnets zum Gehäuse ist eine berührungslose Betätigung der Ventilstange initiierbar. Diese Ausführungsform der Vorrichtung zur Betätigung der Ventilstange zeichnet sich insbesondere durch ihre konstruktive Einfachheit und Zuverlässigkeit aus.

Gemäß einer anderen Ausführungsform weist die Ventilstange wiederum einen Eisenkern oder einen Magneten auf, während außerhalb des geschlossenen Gehäuses ein am Gehäuse fest montierter Elektromagnet angeordnet ist. Durch eine Änderung des Stromdurchflusses durch den Elektromagneten wird eine unterschiedliche Kraft auf die Ventilstange ausgeübt, über die die berührungslose Betätigung der Ventilstange steuerbar ist. Die Verwendung eines fest am Gehäuse montierten Elektromagnets erweist sich als vorteilhaft, da aufgrund des Wegfalls einer Relativbewegung zwischen äußerem Magnet und Gehäuse ein vereinfachter Aufbau gewährleistet ist.

Gemäß einer besonders vorteilhaften Ausführungsform des Stellgeräts steht der Ventilkörper mit einem innerhalb des geschlossenen Gehäuses angeordneten Antrieb in Wirkverbindung, wobei der Antrieb mittels des das Stellgerät durchströmenden Fluid gespeist ist. Dies erweist sich als vorteilhaft, da hierdurch die Betätigungskraft der Vorrichtung zur Betätigung der Ventilstange reduziert ist.

Als Antrieb sind prinzipiell fluidisch betriebene Antriebe nach Stand der Technik möglich, sowohl pneumatisch als auch hydraulisch betätigt. Vorteilhaft ist die Verwendung eines linearen Antriebes, prinzipiell sind - bei geeigneter Umformung der Bewegung auch Schwenkantriebe denkbar. Zur Steuerung des Antriebes ist prinzipiell ein fluidisch betätigter Stellungsregler nach Stand der Technik denkbar, der innerhalb des geschlossenen Gehäuses untergebracht ist. Der Stellungsregler würde die Position des Ventilkörpers erfassen und eine entsprechende Lageregelung durchführen.

Ein mögliches Beispiel eines solchen Stellungsreglers zeigt Fig. 1 von DE 28 47 380 A1: Für dieses Beispiel müsste der Hebel 5 mit einem Magneten versehen werden, dess beaufschlagende Kraft durch eine außerhalb des Gehäuses liegende Vorrichtung wie oben beschrieben gesteuert wird. Das zuströmende Fluid im Ventileintritt des erfindungsgemäßen Stellgeräts würde den Eingang 8 beaufschlagen. Eingang 3 würde entfallen, das aus der Düse 7 abströmende Fluid würde geeignet in den Ventilaustritt des erfindungsgemäßen Stellgeräts überführt.

Prinzipiell sind auch fluidbetriebene elektronische Stellungsregler, auch solche mit Diagnosemöglichkeiten denkbar.

Gemäß einer Ausführungsform ist die Ventilstange vollständig und der Ventilkörper bereichsweise im Gehäuse geführt und zwischen Ventilkörper und Ventilstange ist eine erste und eine zweite Kammer ausgebildet, die über eine Durchgangsöffnung im fluidischen Kontakt miteinander stehen, wobei die dem Ventilkörper zugeordnete erste Kammer über eine Durchgangsbohrung im Ventilkörper mit dem Zulauf im fluidischen Kontakt steht und die der Ventilstange zugeordnete zweite Kammer über eine Bohrung mit dem Ablauf im fluidischen Kontakt steht. Weiterhin ist die Ventilstange derart angeordnet und ausgebildet ist, dass über eine Betätigung der Ventilstange die Durchgangsöffnung zwischen erster und zweiter Kammer zu öffnen und zu schließen ist.

Vorzugsweise ist dabei der Ventilkörper unter Federvorspannung im Gehäuse geführt. Hierdurch ist auf eine einfache Art und Weise eine Rückführung des Ventilkörpers gewährleistet.

Um einen ausreichenden Kraftüberschuss und damit eine ausreichende Kraftwirkung zur Verfügung zur stellen, weist die Durchgangsöffnung einen größeren Durchmesser als die Durchgangsbohrung auf.

Gemäß einer weiteren vorteilhaften Ausführungsform ist die Ventilstange über ein Federelement vorgespannt im geschlossenen Gehäuse geführt.

Gemäß einer weiteren besonders vorteilhaften Ausführungsform der Erfindung ist dem Stellgerät ein Hauptventil vorgeschaltet. Entsprechend zu dem Stellgerät umfasst das Hauptventil ein Grund- und Zusatzgehäuse, wobei Grundgehäuse einen Zu- und einen Ablauf sowie einen zwischen Zu- und Ablauf angeordneten Ventilsitz aufweist und das Zusatzgehäuse einen mit dem Ventilsitz in Wirkverbindung bringbare Ventilkörper sowie eine Ausgleichskammer mit einer Ausgangsöffnung aufweist. Zudem ist der Ventilkörper bereichsweise unter Federvorspannung im Zusatzgehäuse geführt und die Ausgleichskammer steht über eine Durchgangsbohrung im Ventilkörper mit dem Zulauf des Hauptventils im fluidischen Kontakt steht. Das als Vorsteuerstufe wirkende Stellgerät steht mit seinem Zulauf mit der Ausgangsöffnung des Hauptventils und mit seine Ablauf mit dem Ablauf des Hauptventils in fluidischen Kontakt. Weiterhin weist die Durchgangsbohrung im Ventilkörper des Stellgeräts sowie die Durchgangsöffnung zwischen erster und zweiter Kammer des Stellgeräts einen geringeren Durchmesser als die Durchgangsbohrung im Ventilkörper des Hauptventils und die Ausgangsöffnung der Ausgleichskammer des Hauptventils auf. Da der Druck im Zulauf des Stellgeräts gleich dem Eingangsdruck des Hauptventils ist, hat das Stellgerät die gleiche Leistung wie das Hauptventil. Da weiterhin der Durchfluss durch das Hauptventil reguliert wird und die Querschnitte entsprechend gewählt wurden, ist in vorteilhafter Weise die Betätigungskraft, die die Vorrichtung zur Betätigung der Ventilstange des Stellgeräts aufgebracht werden muss, deutlich geringer.

Weitere Vorteile, Merkmale und Anwendungsmöglichkeiten der vorliegenden Erfindung ergeben sich aus der nachfolgenden Beschreibung in Verbindung mit den in den Zeichnungen dargestellten Ausführungsbeispielen.

In der Beschreibung, in den Ansprüchen und in der Zeichnung werden die in der unten aufgeführten Liste der Bezugzeichen verwendeten Begriffe und zugeordneten Bezugzeichen verwendet. In der Zeichnung bedeutet:
- Fig. 1: eine erste Ausführungsform des erfindungsgemäßen Stellgeräts;
- Fig. 2: eine zweite Ausführungsform des erfindungsgemäßen Stellgeräts;
- Fig. 3: eine dritte Ausführungsform des erfindungsgemäßen Stellgeräts, und
- Fig. 4: die Verwendung eines erfindungsgemäßen Stellgeräts als Vorsteuerstufe für eine Hauptventil.

In der nachfolgenden Beschreibung und in den Figuren werden Vermeidung von Wiederholungen gleicher Bauteile und Komponenten auch mit gleichen Bezugszeichen gekennzeichnet, sofern keine weitere Differenzierung erforderlich oder sinnvoll ist.

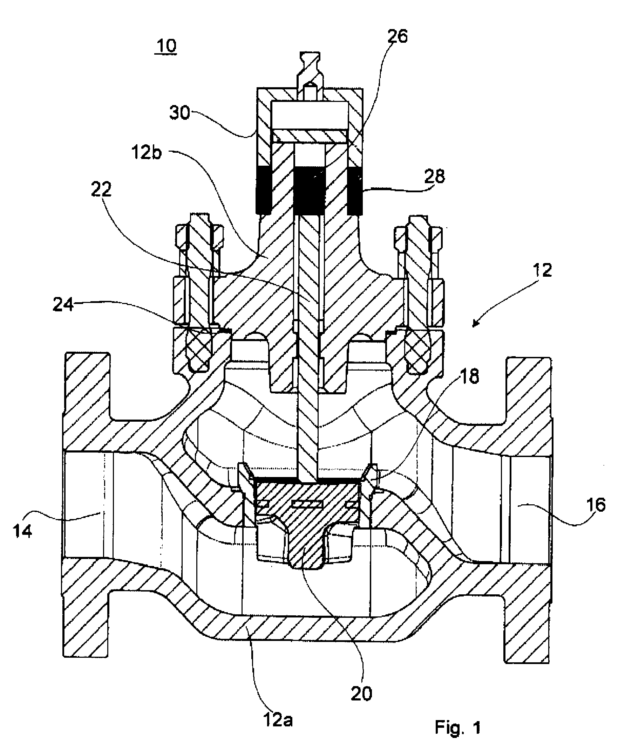

Fig. 1 zeigt mehr oder minder schematisch ein insgesamt mit der Bezugsziffer 10 bezeichnetes Stellgerät zur Steuerung eines das Stellgerät 10 durchströmenden Fluids. Das Stellgerät 10 umfasst ein Grundgehäuse 12a mit einem Zulauf 14 sowie einem Ablauf 16. Zwischen Zulauf 14 und Ablauf 16 ist ein Ventilsitz 18 angeordnet.

Zudem umfasst das Stellgerät 10 einen Ventilkörper 20, der wiederum mit einer Ventilstange 22 verbunden ist. Über eine Hubbewegung der Ventilstange 22 ist der Durchfluss zwischen Ventilkörper 20 und Ventilsitz 18 steuerbar ist. Die entsprechende Vorrichtung zur Betätigung der Ventilstange 22 wird im weiteren Verlauf noch beschrieben.

Des weiteren weist das Stellgerät 10 ein Zusatzgehäuse 12b auf. Wie aus Fig. 1 deutlich ersichtlich ist, ist hierbei das Zusatzgehäuse 12b derart am Grundgehäuse 12a fluiddicht angeordnet, dass das Grund- und Zusatzgehäuse 12a, 12b mit Ausnahme des Zu- und Ablaufs 14, 16 ein allseitig geschlossenes, vollständig gekapseltes, nur eine umlaufende Dichtung 24 aufweisendes Gehäuse 12 bilden. Wie Fig. 1 weiterhin zu entnehmen ist, ist zudem das Zusatzgehäuse 12b derart ausgebildet, dass die Ventilstange 22 durchführungsfrei vollständig im Inneren des geschlossenen Gehäuses 12 angeordnet ist.

Die bereits angesprochene Vorrichtung zur Betätigung der Ventilstange umfasst vorliegend einen mit der Ventilstange 22 fest verbundenen Magnet 26 sowie einen außerhalb des Gehäuses 12 angeordneten Außenmagnet 28, der wiederum über ein Rahmenelement 30 verschiebbar zum Gehäuse 12 angeordnet ist. Über eine Relativbewegung des Rahmens 30 und somit des Außenmagneten 28 in Bezug zum Gehäuse 12 ist somit eine berührungslose Bewegung der Ventilstange 22 ermöglicht.

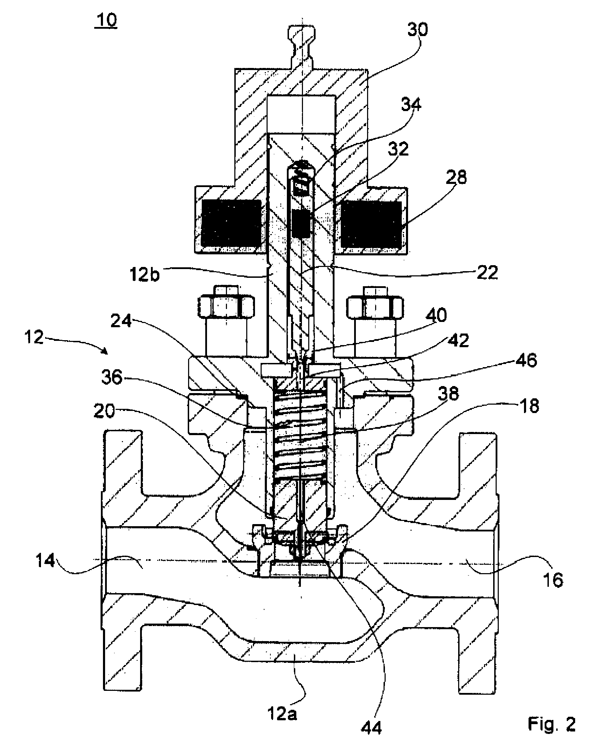

Entsprechend zu der bereits beschriebenen ersten Ausführungsform gemäß Fig. 1 ist auch bei der in Fig. 2 dargestellten zweiten Ausführungsform die Vorrichtung zur Betätigung der Ventilstange wiederum als ein außerhalb des Gehäuses 12 angeordneter, mittels eines Rahmens 30 in Bezug zum Gehäuse 12 verschiebbarer Außenmagnet 28 ausgebildet. Im Gegensatz zu der in Fig. 1 dargestellten ersten Ausführungsform ist gemäß der zweiten Ausführungsform die Ventilstange 22 fest mit einem Eisenkörper 32 verbunden, so dass wiederum durch eine Bewegung des Rahmens 30 im Bezug zum Gehäuse 12 eine berührungslose Bewegung der Ventilstange 22 ermöglich ist.

Weiterhin ist, wie Fig. 2 zu entnehmen ist, das Zusatzgehäuse 12b derart ausgebildet, dass die Ventilstange 22 vollständig und der Ventilkörper 20 bereichsweise im Zusatzgehäuse 12b geführt sind. Hierbei sind die Ventilstange 22 über eine Feder 34 und der Ventilkörper 20 über einer Feder 36 unter Federvorspannung im Zusatzgehäuse 12b geführt.

Zudem ist zwischen Ventilkörper 20 und Ventilstange 22 eine erste Kammer 38 sowie eine zweite Kammer 40 ausgebildet, die über eine Durchgangsöffnung 42 im fluidischen Kontakt miteinander stehen. Während die erste Kammer 38 über eine in den Ventilkörper 20 eingebrachte Durchgangsbohrung 44 mit dem Zulauf 14 in fluidischen Kontakt steht, steht die zweite Kammer 40 über eine Bohrung 46 in fluidischen Kontakt mit dem Ablauf 16.

Wie Fig. 2 weiter zu entnehmen ist, ist die Ventilstange 22 derart angeordnet und ausgebildet, dass über eine Betätigung der Ventilstange 22 die Durchgangsöffnung 42 zwischen erster und zweiter Kammer 38, 40 zu öffnen und zu schließen ist.

Hierdurch ist, wie nachfolgende Betrachtung zeigt, die notwendige Kraft zur Betätigung der Ventilstange 22 vermindert: Zur Druckentlastung wird das Fluid durch die Durchgangsbohrung 44 im Ventilkörper 20 in die erste Kammer 38 und damit auf die Rückseite des Ventilkörpers 20 geleitet. Damit ist der Ventilkörper 20 kräftefrei. In diesem Zustand wird der Ventilkörper 22 mit der vollen Kraft der Feder 36 in den Ventilsitz 18 gedrückt. Eine Bewegung des Ventilkörpers 20 kann nun dadurch erreicht werden dass der auf die Oberseite des Ventilkörpers 20 einwirkende Druck verringert wird. Zu diesem Zweck wird über eine Bewegung der Ventilstange 22 die Durchgangsöffnung 42 zwischen erster und zweiter Kammer 38, 40 geöffnet, so dass Fluid von der ersten Kammer 38 über die Durchgangsöffnung 42 in die zweite Kammer 40 und von dort über die Bohrung 46 zum Ablauf 16 fließen kann. Hierbei ist das Verhältnis der Durchgangsöffnung 42 zur Durchgangsbohrung 44 so gewählt, dass die Durchgangsöffnung 42 einen deutlich größeren Durchfluss gestattet, so dass bei vollständiger Öffnung der Durchgangsöffnung 42 ein fast vollständiger Abbau des Druckes oberhalb des Ventilkörpers 20 erreicht werden kann.

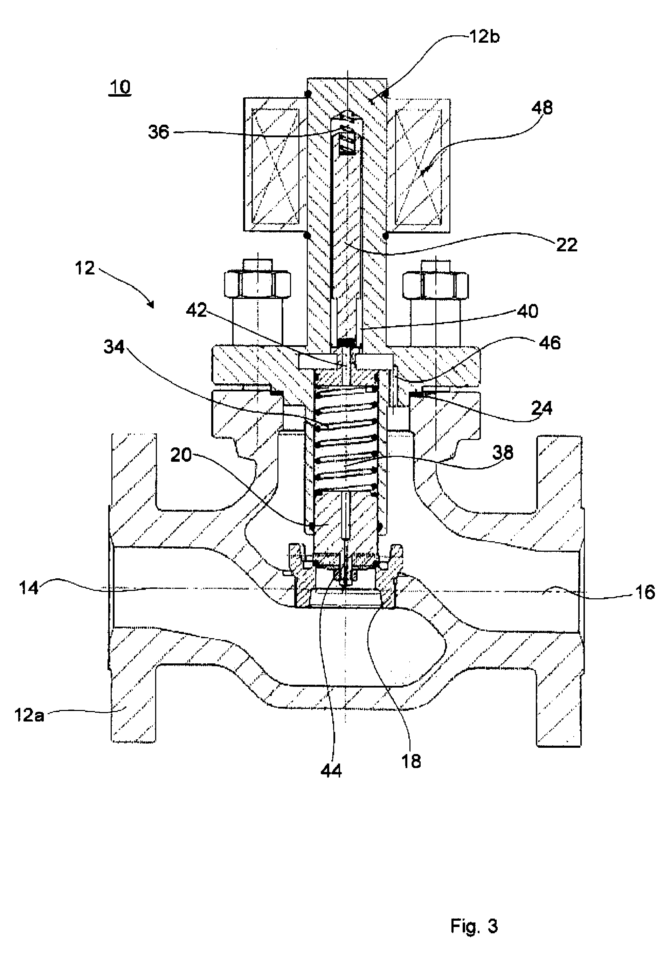

Die in Fig. 3 dargestellte dritte Ausführungsform der Erfindung entspricht im Wesentlichen der in Fig. 2 dargestellten zweiten Ausführungsform. Im Gegensatz zu der in Fig. 2 dargestellten zweiten Ausführungsform ist bei dritten Ausführungsform lediglich die Vorrichtung zur Betätigung der Ventilstange anders ausgebildet.

Die Ventilstange 22 ist wiederum mit einem Eisenkern 32 oder einem inneren Magneten 26 fest verbunden. Außerhalb des Gehäuses 12 ist ein Elektromagnet 48 fest mit dem Gehäuse verbunden. Durch eine Änderung des Stromflusses wird durch den Elektromagneten 48 eine unterschiedliche Kraft auf die Ventilstange 22 ausgeübt.

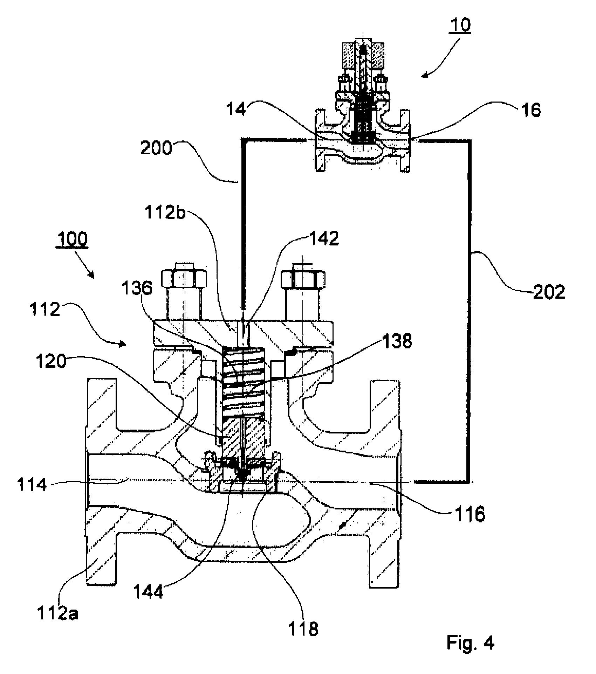

Gemäß Fig. 4 ist dem erfindungsgemäßen Stellgerät 10 ein insgesamt mit der Bezugsziffer 100 bezeichnetes Hauptventil vorgeschaltet. Zur Vermeidung von Wiederholungen wird In Bezug auf den Aufbau des Stellgeräts 10 auf das oben unter Fig. 2 und 3 dargelegte verwiesen.

Das Hauptventil 100 umfasst ein Grundgehäuse 112a, welches einen Zulauf 114 sowie einen Ablauf 116 aufweist. Zwischen dem Zulauf 114 und dem Ablauf 116 ist ein Ventilsitz 118 angeordnet. Weiterhin umfasst das Hauptventil 100 ein Zusatzgehäuse 112b, welches mit dem Grundgehäuse 12a ein Gehäuse 112 des Hauptventils 100 bildet.

Das Zusatzgehäuse 112b ist dabei derart ausgebildet, dass ein mit dem Ventilsitz 118 in Wirkverbindung stehender Ventilkörper 120 unter Vorspannung einer Feder 136 bereichsweise im Zusatzgehäuse 112b geführt ist. Zudem weist das Zusatzgehäuse 112b eine Ausgleichskammer 138 mit einer Ausgangsöffnung 142 auf.

Während die Ausgleichskammer 138 über eine in den Ventilkörper 120 eingebrachte Durchgangsbohrung 144 in fluidischen Kontakt mit dem Zulauf 114 des Hauptventils 100 steht, ist die Ausgangsöffnung 142 über eine Leitung 200 mit dem Zulauf 14 des Stellgeräts 10 und der Ablauf 16 des Stellgeräts 10 über eine Leitung 202 mit dem Ablauf 116 des Hauptventils 100 verbunden. Hierbei ist sowohl der Durchmesser der Durchgangsbohrung 44 im Ventilkörper 20 des Stellgeräts 10 im Bezug zum Durchmesser der Durchgangsbohrung 144 im Ventilkörper 120 des Hauptventils als auch der Durchmesser Ausgangsöffnung 142 im Gehäuse 112b des Hauptventils 100 im Bezug zur Durchgangsöffnung 142 zwischen erster und zweiter Kammer 36, 38 des Stellgeräts wesentlich geringer ausgebildet.

Da der Druck im Zulauf 16 des Stellgeräts 10 gleich dem Eingangsdruck des Hauptventils 100 ist, hat das Stellgerät 10 die gleiche Leistung wie das Hauptventil 100. Da weiterhin der Durchfluss durch das Hauptventil 100 reguliert wird und die Querschnitte entsprechend gewählt wurden, ist in vorteilhafter Weise die Betätigungskraft, die die Vorrichtung zur Betätigung der Ventilstange 22 des Stellgeräts 10 aufgebracht werden muss, deutlich geringer.

### Bezugszeichenliste

- 10: Stellgerät
- 12: Gehäuse
- 12a: Grundgehäuse
- 12b: Zusatzgehäuse
- 14: Zulauf
- 16: Ablauf
- 18: Ventilsitz
- 20: Ventilkörper
- 22: Ventilstange
- 24: Dichtung
- 26: innerer Magnet
- 28: äußerer Magnet
- 30: Rahmen
- 32: Eisenkörper
- 34: Feder
- 36: Feder
- 38: erste Kammer
- 40: zweite Kammer
- 42: Durchgangsöffnung zwischen erster und zweiter Kammer des Stellgeräts
- 44: Durchgangsbohrung im Ventilkörper des Stellgeräts
- 46: Bohrung
- 48: Elektromagnet
- 100: Hauptventil
- 112: Gehäuse
- 112a: Grundgehäuse
- 112b: Zusatzgehäuse
- 114: Zulauf
- 116: Ablauf
- 118: Ventilsitz
- 120: Ventilkörper
- 136: Feder
- 138: Ausgleichskammer
- 144: Durchgangsbohrung
- 142: Ausgangsöffnung
- 200: Leitung
- 202: Leitung

## Patentansprüche

1. Stellgerät (10) zur Steuerung eines Fluidstroms, umfassend
- ein Grundgehäuse (12a) mit einem Zulauf (14) und einem Ablauf (16);
- einen im Grundgehäuse (12) zwischen Zu- und Ablauf (14, 16) angeordneten Ventilsitz (18);
- einen mit dem Ventilsitz (18) in Wirkverbindung bringbarer Ventilkörper (20);
- eine Ventilstange (22) zur Betätigung des Ventilkörpers (20), sowie
- eine Vorrichtung zur Betätigung der Ventilstange (22)
**dadurch gekennzeichnet, dass**
am Grundgehäuse (12a) fluiddicht ein Zusatzgehäuse (12b) angeordnet ist und Grund- und Zusatzgehäuse (12a, 12b) mit Ausnahme des Zu- und Ablaufes (14, 16) ein allseitig geschlossenes, vollständig gekapseltes, nur eine umlaufende Dichtung (24) aufweisendes Gehäuse (12) bilden, und dass die Ventilstange (22) durchführungsfrei vollständig im Innern geschlossenen Gehäuses (12) angeordnet ist.

2. Stellgerät (10) zur Steuerung eines Fluidstroms nach Anspruch 1, **dadurch gekennzeichnet, dass** die Vorrichtung zur Betätigung der Ventilstange (22) außerhalb des geschlossenen Gehäuses (12) angeordnet ist und berührungslos mit der Ventilstange (22) in Wirkverbindung steht.

3. Stellgerät (10) zur Steuerung eines Fluidstroms nach Anspruch 2, **dadurch gekennzeichnet, dass** die Vorrichtung zur Betätigung der Ventilstange die Ventilstange (22) über eine magnetische und/oder elektromagnetische Kraft betätigt.

4. Stellgerät (10) zur Steuerung eines Fluidstroms nach Anspruch 3, **dadurch gekennzeichnet, dass** die Ventilstange (22) einen Eisenkern (32) oder einen Magnet (26) aufweist und die Vorrichtung zur Betätigung der Ventilstange als ein in Bezug zum geschlossenen Gehäuse (12) verschiebbarer Außenmagnet (28) ausgebildet ist.

5. Stellgerät (10) zur Steuerung eines Fluidstroms nach Anspruch 3, **dadurch gekennzeichnet, dass** die Ventilstange (22) einen Eisenkern (32) oder einen Magnet (26) aufweist und die Vorrichtung zur Betätigung der Ventilstange als ein am Gehäuse (12) fest montierter Elektromagnet (48) ausgebildet ist.

6. Stellgerät (10) zur Steuerung eines Fluidstroms nach einem der vorgenannten Ansprüche,
**dadurch gekennzeichnet, dass** der Ventilkörper (20) mit einem innerhalb des geschlossenen Gehäuses angeordneten, fluidgespeisten Antrieb in Wirkverbindung steht.

7. Stellgerät (10) zur Steuerung eines Fluidstroms nach einem der vorgenannten Ansprüche ,
**dadurch gekennzeichnet, dass** eine Messung der Position des Ventilkörpers (20) und eine Sollwertregelung des Ventilkörpers (20) auf eine bestimmte Position durch einen Stellungsregler erfolgt, der ganz im geschlossenen Gehäuse (12) untergebracht ist, der sein Arbeitsfluid aus dem Fluid am Ventileintritt (14) gewinnt und dessen Sollwert durch Krafteinleitung geschieht, wobei diese Krafteinleitung durch magnetische oder elektromagnetische Einleitung einer außerhalb des geschlossenen Gehäuses liegenden Vorrichtung geschieht.

8. Stellgerät (10) zur Steuerung eines Fluidstroms nach Anspruch 6 oder 7, **dadurch gekennzeichnet, dass** die Ventilstange (22) vollständig und der Ventilkörper (20) bereichsweise im Gehäuse geführt ist und zwischen Ventilkörper (20) und Ventilstange (22) eine erste und eine zweite Kammer (38, 40) ausgebildet ist, die über eine Durchgangsöffnung (42) im fluidischen Kontakt miteinander stehen, wobei die dem Ventilkörper (20) zugeordnete erste Kammer (38) über eine Durchgangsbohrung (44) im Ventilkörper (20) mit dem Zulauf (14) im fluidischen Kontakt steht und die der Ventilstange (22) zugeordnete zweite Kammer (40) über eine Bohrung (46) mit dem Ablauf (16) im fluidischen Kontakt steht, und wobei die Ventilstange (22) derart angeordnet und ausgebildet ist, dass über eine Betätigung der Ventilstange (22) die Durchgangsöffnung (42) zwischen erster und zweiter Kammer (38, 40) zu öffnen und zu schließen ist.

9. Stellgerät (10) zur Steuerung eines Fluidstroms nach Anspruch 8, **dadurch gekennzeichnet, dass** der Ventilkörper (20) über ein Federelement (36) vorgespannt im Gehäuse geführt ist.

10. Stellgerät (10) zur Steuerung eines Fluidstroms nach Anspruch 8 oder 9, **dadurch gekennzeichnet, dass** die Durchgangsöffnung (42) einen größeren Durchmesser als die Durchgangsbohrung (44) aufweist.

11. Stellgerät () zur Steuerung eines Fluidstroms nach einem der vorgenannten Ansprüche,
**dadurch gekennzeichnet, dass** die Ventilstange (22) über ein Federelement (34) vorgespannt im Gehäuse geführt ist.

12. Verwendung eines Stellgerät (10) nach einem der Ansprüche 8 bis 11 zur Steuerung eines Hauptventils (100), wobei das Hauptventil (100) ein Grund- und ein Zusatzgehäuse (112a, 112b) umfasst und das Grundgehäuse (112a) einem Zu- und einen Ablauf (114, 116) sowie einen zwischen Zu- und Ablauf (114, 116) angeordneten Ventilsitz (118) aufweist, und das Zusatzgehäuse (112b) einen mit dem Ventilsitz (118) in Wirkverbindung bringbaren Ventilkörper (120) sowie eine Ausgleichskammer (138) mit einer Ausgangsöffnung (142) aufweist, und der Ventilkörper (120) bereichsweise unter Federverspannung im Zusatzgehäuse (112b) geführt ist und die Ausgleichskammer (138) über eine Durchgangsbohrung (144) im Ventilkörper (120) mit dem Zulauf (114) des Hauptventils (100) im fluidischen Kontakt steht, wobei die Ausgangsöffnung (142) der Ausgleichskammer (138) mit dem Zulauf (14) des Stellgeräts (10) und der Ablauf (16) des Stellgeräts (10) mit dem Ablauf (116) des Hauptventils (100) im fluidischen Kontakt steht und wobei die Durchgangsbohrung (44) im Ventilkörper (20) des Stellgeräts (10) sowie die Durchgangsöffnung (42) zwischen erster und zweiter Kammer (38, 40) des Stellgeräts (10) einen geringeren Durchmesser als die Durchgangsbohrung (144) im Ventilkörper (120) des Hauptventils (100) und die Ausgangsöffnung (142) der Ausgleichskammer (138) des Hauptventils (100) aufweist.
